(19) Europäisches Patentamt
European Patent Office
Office européen des brevets

(11) Publication number: **0 102 459**
**B1**

(12) **EUROPEAN PATENT SPECIFICATION**

(45) Date of publication of patent specification: **05.03.86**

(51) Int. Cl.$^4$: **C 09 K 11/77**

(21) Application number: **83105721.1**

(22) Date of filing: **10.06.83**

(54) **Divalent europium-activated barium fluorohalide phosphor.**

(30) Priority: **11.06.82 JP 99278/82**
**13.09.82 JP 158048/82**

(43) Date of publication of application:
**14.03.84 Bulletin 84/11**

(45) Publication of the grant of the patent:
**05.03.86 Bulletin 86/10**

(84) Designated Contracting States:
**DE FR GB NL**

(56) References cited:
**FR-A-2 340 361**

(73) Proprietor: **FUJI PHOTO FILM CO., LTD.**
**210 Nakanuma Minami Ashigara-shi**
**Kanagawa 250-01 (JP)**

(72) Inventor: **Umemotô, Chiyuki c/o FUJI PHOTO FILM Co., Ltd.**
**No.798, Miyanodai, Kaisei-machi**
**Ashigara-kami-gun Kanagawa (JP)**
Inventor: **Takahashi, Kenji c/o FUJI PHOTO FILM Co., Ltd.**
**No.798, Miyanodai, Kaisei-machi**
**Ashigara-kami-gun Kanagawa (JP)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath**
**Maximilianstrasse 58**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 102 459 B1

**Description**

The present invention relates to a phosphor i.e. a compound emitting light when excited by radiation, and a process for the preparation of the same. More particularly, the invention relates to a divalent europium activated barium fluorohalide phosphor and a process for the preparation of the same.

A divalent europium activated barium fluorohalide phosphor has the high absorption efficiency for radiation such as X-rays and gives an emission (spontaneous emission) in the near ultra-violet region, whose absorption maximum is seen at the wavelength of about 390 nm, upon excitation with the radiation such as X-rays. Accordingly, it is known that the phosphor can be employed in a radiographic intensifying screen for medical radiography for the purpose of medical diagnosis and for industrial radiography for the purpose of nondestructive test.

Recently, it has been discovered that the divalent europium activated barium fluorohalide phosphor is a stimulable phosphor. That is, the phosphor stores a portion of radiation energy when exposed to radiation such as X-rays, and subsequently emits light in the near ultra-violet region when exposed to an electromagnetic wave in the wavelength region of 450—800 nm. This emission is called "stimulated emission". For this reason, the divalent europium activated barium fluorohalide phosphor has been recently given attention and earnestly studied as a phosphor for a radiation image storage panel employed in a radiation image recording and reproducing method utilizing a stimulable phosphor. The radiation image recording and reproducing method is disclosed, for example, in Japanese Patent Provisional Publication No. 55(1980)—12429.

In this respect, Japanese Patent Provisional Publication No. 55(1980)—12143 describes a divalent europium activated barium fluorohalide phosphor for a radiation image storage panel wherein a portion of barium serving as the host component is replaced with the other specific alkaline earth metals having the formula:

$$(Ba_{1-x-y}Mg_xCa_y)FX:aEu^{2+}$$

in which X is at least one halogen selected from the group consisting of Br and Cl; and *x*, *y* and *a* are numbers satisfying the conditions of

$$0<x+y\leqq 0.6,\ xy\neq 0$$
$$\text{and } 10^{-6}\leqq a\leqq 5\times 10^{-2}.$$

When a stimulable phosphor is employed in a radiation image storage panel for carrying out medical diagnosis, it is preferred to decrease the exposure dose for patient and to facilitate a procedure for processing the stimulated emission to convert to electric signals. Accordingly, it is desired that the luminance of stimulated emission of the phosphor is as high as possible. In the case of using the phosphor for a radiographic intensifying screen utilizing the spontaneous emission thereof, also desirable is that the luminance of spontaneous emission of the phosphor is as high as possible, so as to reduce the exposure dose for patient to as low level as possible. For these reasons, enhancement in the luminance of stimulated emission is desired for the phosphor used in a radiation image storage panel, and likewise, enhancement in the luminance of spontaneous emission is desired for the phosphor used in a radiographic intensifying screen. Especially when the radiation is applied to a human body as described above, the enhancement in the luminance of spontaneous emission or of the luminance of stimulated emission is of much value from the viewpoint of adverse effect of the radiation on the human body, even if the level of the enhancement is not so remarkable.

Accordingly, a principal object of the present invention is to provide a divalent europium activated barium fluorohalide phosphor showing the enhancement in the luminance of stimulated emission upon stimulation with an electromagnetic wave in the wavelength region of 450—800 nm after exposure to radiation such as X-rays, as well as to provide a process for the preparation of the same.

Another object of the invention is to provide a divalent europium activated barium fluorohalide phosphor showing the enhancement in the luminance of spontaneous emission upon excitation with radiation such as X-rays, as well as to provide a process for the preparation of the same.

These objects are accomplished by the phosphor and the process for the preparation of the same of the present invention.

The phosphor provided by the invention is a divalent europium activated barium fluorohalide phosphor having the formula (I):

$$BaFX\cdot xA:yEu^{2+} \qquad (I)$$

in which X is at least one halogen selected from the group consisting of Cl, Br and I; A is at least one fired product of a hexafluoro compound selected from the group consisting of monovalent and divalent metal salts of hexafluoro silicic acid, hexafluoro titanic acid and hexafluoro zirconic acid; and *x* and *y* are numbers satisfying the conditions of

$$10^{-6}\leqq x\leqq 0.1$$

and

$$0<y\leqq 0.1,$$

respectively.

The divalent europium activated barium fluorohalide phosphor having the above-mentioned formula (I) can be prepared by a process,

which comprises:

mixing raw materials for the preparation of a phosphor in a stoichiometric ratio corresponding to the formula (IV):

$$BaFX{:}yEu \quad (IV)$$

in which X and y have the same meanings as defined above;

adding to the resulting mixture at least one hexafluoro compound selected from the group consisting of monovalent and divalent metal salts of hexafluoro silicic acid, hexafluoro titanic acid and hexafluoro zirconic acid in the amount of x mol for 1 gram atom of barium contained in the mixture; and

firing the so obtained mixture.

The divalent europium activated barium fluorohalide phosphor having the formula (I) of the invention gives prominently higher luminance of stimulated emission than the known divalent europium activated barium fluorohalide phosphors, when stimulated with an electromagnetic wave in the wavelength region of 450—800 nm after exposure to radiation such as X-rays, ultraviolet rays or cathode rays.

In addition, the divalent europium activated barium fluorohalide phosphor having the formula (I) of the invention also gives higher luminance of spontaneous emission in the near ultraviolet region than the known divalent europium activated barium fluorohalide phosphors, when exposed to radiation such as X-rays, ultraviolet rays or cathode rays.

The present invention is now described hereinafter more in detail.

The divalent europium activated barium fluorohalide phosphor of the invention can be prepared, for instance, by a process described below.

As the starting materials, the following materials can be employed:

1) $BaF_2$ (barium fluoride);

2) at least one barium halide selected from the group consisting of $BaCl_2$, $BaBr_2$ and $BaI_2$;

3) at least one europium halide selected from the group consisting of $EuCl_3$, $EuBr_3$ and $EuI_3$; and

4) at least one hexafluoro compound selected from the group consisting of monovalent and divalent metal salts of hexafluoro silicic acid, hexafluoro titanic acid and hexafluoro zirconic acid.

The metal constituting the above-mentioned hexafluoro compound (4) is preferably an alkali metal belonging to Second to Sixth Periods of Group Ia of Periodic Table; an alkaline earth metal belonging to Third to Sixth Periods of Group IIa of Periodic Table; zinc; and manganese, because these metals are stable, and further these metals as such show neither absorptions nor emissions within the emission region of the resulting phosphor.

The above-mentioned hexafluoro compound is preferably a compound having the formula (II):

$$M_aSiF_6 \quad (II)$$

in which *a* is 2 or 1; M is an alkali metal selected from the group consisting of Li, Na, K, Rb and Cs in the case of a=2; and M is a divalent metal selected from the group consisting of Mg, Ca, Sr, Ba, Zn and Mn in the case of a=1.

Particularly preferred is a compound having the above-mentioned formula (II) in which *a* is 2 and M is an alkali metal selected from the group consisting of Li, Na, K, Rb and Cs.

Also preferred is a hexafluoro compound having the formula (III):

$$M_2QF_6 \quad (III)$$

in which Q is Zr or Ti and M is an alkali metal selected from the group consisting of Li, Na, K, Rb and Cs.

In the process for the preparation of the phosphor of the invention, the above-mentioned barium fluoride (1), the barium halide (2) and the europium halide (3) are, in the first place, mixed in the stoichiometric ratio corresponding to the formula (IV):

$$BaFX{:}yEu \quad (IV)$$

in which X is at least one halogen selected from the group consisting of Cl, Br and I; and *y* is a number satisfying the condition of

$$0<y\leqq 0.1.$$

The mixing procedure is carried out in a suspension. The solvent of the suspension is then removed to obtain a dry mixture. The removal of the solvent is preferably carried out at room temperature or not so high temperature. (for example, not more than 200°C) under reduced pressure, or vacuum, otherwise under reduced pressure and subsequently under vacuum. The so obtained dry mixture is pulverized finely in a mortar or the like. To the pulverized mixture is added the above-mentioned hexafluoro compound (4) in the amount of x mol (*x* is a number satisfying the condition of

$$10^{-6}\leqq x\leqq 0.1)$$

for 1 gram atom of barium contained in the above-mentioned dry mixture, and these are then mixed well to obtain a mixture of the starting materials for the phosphor containing the hexafluoro compound.

In the phosphor of the invention having the formula (I), the above-mentioned *x* and *y* preferably are numbers satisfying the conditions of

$$10^{-4}\leqq x\leqq 10^{-2}$$

and

$$10^{-5}\leqq y\leqq 10^{-2},$$

respectively, from the viewpoint of enhancement in the luminance of stimulated emission or in the luminance of spontaneous emission.

Subsequently, the mixture of the starting materials is placed in a heat-resistant container such as a quartz boat, an alumina crusible or a quartz crusible, and fired in an electric furnace.

The temperature for the firing suitably ranges from 600 to 1000°C. The firing period is determined depending upon the amount of the mixture of the starting materials, the firing temperature, etc., and generally ranges from 0.5 to 12 hours. As the firing atmosphere, there can be employed a weak reducing atmosphere such as a nitrogen gas atmosphere containing a small amount of hydrogen gas or a carbon dioxide gas atmosphere containing carbon monoxide gas. In the firing stage, the trivalent europium contained in the mixture is reduced into divalent europium under the weak reducing atmosphere.

The product obtained upon firing under the above-mentioned conditions is taken out of the furnace, allowed to stand for cooling, and pulverized. The so pulverized product may be again placed in the heat-resistant container and fired in the electric furnace. In the second firing, the temperature of the firing suitably ranges from 500 to 800°C and the firing period suitably ranges from 0.5 to 12 hours. For carrying out the second firing, there can be employed an inert atmosphere such as a nitrogen gas atmosphere or an argon gas atmosphere, as well as the above-mentioned weak reducing atmosphere.

After the firing is complete, the fired product is finely pulverized to obtain a powdery phosphor of the invention. The so obtained phosphor may be processed in a conventional manner involving a variety of procedures for the preparation of phosphors such as a washing procedure, a drying procedure and a sieving procedure.

The phosphor of the present invention prepared in the above-mentioned process is a divalent europium activated barium fluorohalide phosphor having the formula (I):

$$BaFX \cdot xA{:}yEu^{2+} \qquad (I)$$

in which X, $x$ and $y$ are the same meanings as defined above; and A is at least one fired product of a hexafluoro compound selected from the group consisting of monovalent and divalent metal salts of hexafluoro silicic acid, hexafluoro titanic acid and hexafluoro zirconic acid.

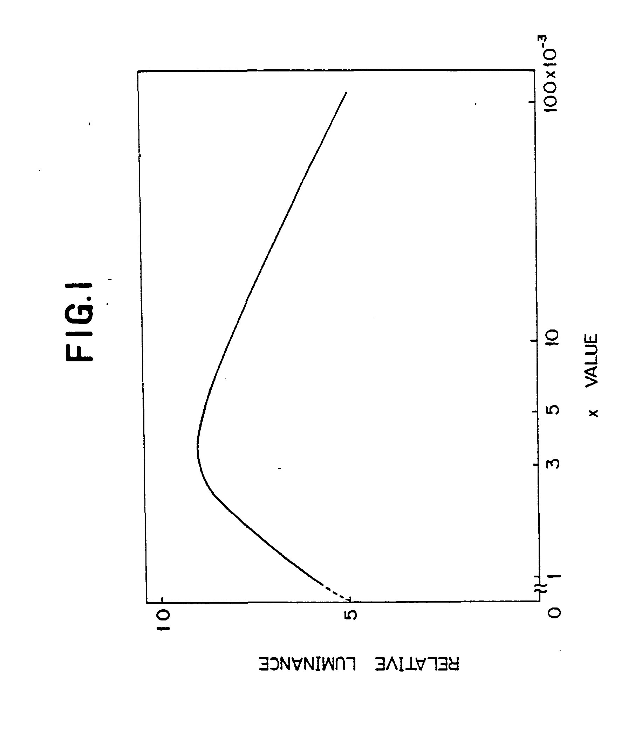

There is observed a certain relationship between the x value and the emission luminance in terms of relative value, namely the relative luminance, for a phosphor of the present invention having the formula (I). This relationship is illustrated graphically in Fig. 1, where x value is the content of the fired product of at least one hexafluoro compound selected from the group consisting of monovalent and divalent metal salts of hexafluoro silicic acid, hexafluoro titanic acid and hexafluoro zirconic acid.

More in detail, Fig. 1 shows a relationship between the luminance of stimulated emission upon stimulation with He-Ne laser (oscillation wavelength: 632.8 nm) after exposure to X-rays at 80 KVp, and the content of the fired product of sodium hexafluoro silicate contained in the phosphor, that is, the x value corresponding to the addition amount of sodium hexafluoro silicate to the starting materials for the phosphor, the relationship being observed for the following phosphor;

$$BaFBr \cdot xA{:}\ 0.001Eu^{2+}$$

in which A is a fired product of $Na_2SiF_6$.

As is clear from Fig. 1, the luminance of stimulated emission of the divalent europium activated barium fluorobromide phosphor is increased when a fired product of sodium hexafluoro silicate is incorporated within the specific range. The emission luminance reaches the maximum when the content (x value) is approximately $3.3 \times 10^{-3}$ (amount of sodium hexafluoro silicate added: mol for 1 gram atom of barium contained in the phosphor), and in contrast, is noticeably decreased where the x value exceeds 0.1.

A similar relationship between the content and the luminants of stimulated emission is also observed on any one of other phosphors of the present invention in which A is replaced with a fired product of a hexafluoro compound belonging to the aforementioned hexafluoro compounds. Also is observed a similar relationship between the x value and the emission luminance with respect to the spontaneous emission of the phosphor of the present invention.

The phosphor of the present invention, as described above, gives remarkably high luminance of stimulated emission upon stimulation with an electromagnetic wave in the wavelength region of 450—800 nm after exposure to radiation such as X-rays, as compared with the known divalent europium activated barium fluorohalide phosphors. The phosphor of the present invention also gives the high luminance of spontaneous emission upon excitation with radiation such as X-rays, as compared with the known divalent europium activated barium fluorohalide phosphors. Accordingly, the phosphor of the invention is suitably employable for a radiation image storage panel, as well as for a radiograhic intensifying screen.

The present invention is now illustrated by the following examples, but these examples by no means restrict the invention.

Example 1

To 500 cc. of distilled water ($H_2O$) were added 175.34 g. of barium fluoride ($BaF_2$), 333.18 g. of barium bromide

$$(BaBr_2 \cdot 2H_2O)$$

and 0.783 g. of europium bromide ($EuBr_3$), and mixed therewith to give a suspension. The suspension was dried at 60°C under reduced pressure for 3 hours and further dried at 150°C under vacuum for another 3 hours. The dried product was finely pulverized in a mortar. To the so pulverized product was then added 1.24 g. of

sodium hexafluoro silicate ($Na_2SiF_6$), and mixed with to obtain a homogeneous mixture of the starting materials for the preparation of a phosphor.

The so obtained mixture was placed in an alumina crusible, which was, in turn, placed in a high-temperature electric furnace. The mixture was then fired at 900°C for 1.5 hours under a carbon dioxide atmosphere containing carbon monoxide. After the firing was complete, the crusible was taken out of the furnace and allowed to stand for cooling. The fired product was pulverized to obtain a divalent europium activated barium fluorobromide phosphor powder

$$(BaFBr \cdot 3.3\times10^{-3}A:0.001Eu^{2+},$$

in which A was a fired product of $Na_2SiF_6$).

Example 2

The same amounts of barium fluoride, barium bromide, europium bromide and distilled water as employed in Example 1 were mixed to prepare a suspension. The suspension was dried and pulverized in the same manner as described in Example 1. To the pulverized product was then added 0.124 g. of sodium hexafluoro silicate ($Na_2SiF_6$), and mixed therewith to obtain a homogenous mixture of the starting materials for the preparation of a phosphor.

The procedure of Example 1 was repeated except for using the so prepared mixture to obtain a divalent europium activated barium fluorobromide phosphor powder

$$(BaFBr \cdot 3.3\times10^{-4}A:0.001Eu^{2+},$$

in which A was a fired product of $Na_2SiF_6$).

Example 3

The same amounts of barium fluoride, barium bromide, europium bromide and distilled water as employed in Example 1 were mixed to prepare a suspension. The suspension was dried and pulverized in the same manner as described in Example 1. To the pulverized product was then added 3.72 g. of sodium hexafluoro silicate ($Na_2SiF_6$), and mixed therewith to obtain a homogeneous mixture of the starting materials for the preparation of a phosphor.

The procedure of Example 1 was repeated except for using the so prepared mixture to obtain a divalent europium activated barium fluorobromide phosphor powder

$$(BaFBr \cdot 9.9\times10^{-3}A:0.001Eu^{2+},$$

in which A was a fired product of $Na_2SiF_6$).

Example 4

The same amounts of barium fluoride, barium bromide, europium bromide and distilled water as employed in Example 1 were mixed to prepare a suspension. The suspension was dried and pulverized in the same manner as described in Example 1. To the pulverized product was then added 37.61 g. of sodium hexafluoro silicate ($Na_2SiF_6$), and mixed therewith to obtain a homogeneous mixture of the starting materials for the preparation of a phosphor.

The procedure of Example 1 was repeated except for using the so prepared mixture to obtain a divalent europium activated barium fluorobromide phosphor powder

$$(BaFBr \cdot 0.1A:0.001Eu^{2+},$$

in which A was a fired product of $Na_2SiF_6$).

Comparison Example 1

The same amounts of barium fluoride, barium bromide, europium bromide and distilled water as employed in Example 1 were mixed to prepare a suspension. The suspension was dried and pulverized in the same manner as described in Example 1 to obtain a pulverized mixture of the starting materials for the preparation of a phosphor.

The procedure of Example 1 was repeated except for using the so prepared mixture to obtain a divalent europium activated barium fluorobromide phosphor powder

$$(BaFBr:0.001Eu^{2+}).$$

The phosphors prepared in Examples 1 through 4 and Comparison example 1 were stimulated with He-Ne laser (oscillation wavelength: 632.8 nm) after exposure to X-rays at 80 KVp, to evaluate the luminance of stimulated emission. The results are set forth in Table 1.

TABLE 1

| | x value | Relative luminance |
|---|---|---|
| Example 1 | $3.3\times10^{-3}$ | 180 |
| 2 | $3.3\times10^{-4}$ | 105 |
| 3 | $9.9\times10^{-3}$ | 163 |
| 4 | 0.1 | 103 |
| Com. Example 1 | 0 | 100 |

Example 5

To 500 cc. of distilled water ($H_2O$) were added 175.34 g. of barium fluoride ($BaF_2$), 333.18 g. of barium bromide

$$(BaBr_2 \cdot 2H_2O)$$

and 0.783 g. of europium bromide ($EuBr_3$), and mixed therewith to give a suspension. The suspension was dried at 60°C under reduced

pressure for 3 hours and further dried at 150°C under vacuum for another 3 hours. The dried product was finely pulverized in a mortar. To the so pulverized product was then added 1.44 g. of calcium hexafluoro silicate

$(CaSiF_6 \cdot 2H_2O)$,

and mixed therewith to obtain a homogeneous mixture.

The so obtained mixture for a phosphor was placed in an alumina crusible, which was, in turn, placed in a high-temperature electric furnace. The mixture was then fired at 900°C for 1.5 hours under a carbon dioxide atmosphere containing carbon monoxide. After the firing was complete, the crusible was taken out of the furnace and allowed to stand for cooling. The fired product was pulverized, placed in the alumina crusible again, and then fired at 600°C for 1 hour under a nitrogen gas atmosphere (the second firing). After the second firing was complete, the fired product was allowed to stand for cooling and pulverized finely to obtain a divalent europium activated barium fluorobromide phosphor powder

$(BaFBr \cdot 3.3\times10^{-3}A:0.001Eu^{2+}$,

in which A was a fired product of $CaSiF_6$).

Example 6

The same amounts of barium fluoride, barium bromide, europium bromide and distilled water as employed in Example 5 were mixed to prepare a suspension. The suspension was dried and pulverized in the same manner as described in Example 5. To the pulverized product was then added 0.144 g. of calcium hexafluoro silicate ($CaSiF_6$), and mixed therewith to obtain a homogeneous mixture of the starting materials for the preparation of a phosphor.

The procedure of Example 5 was repeated except for using the so prepared mixture to obtain a divalent europium activated barium fluorobromide phosphor powder

$(BaFBr \cdot 3.3\times10^{-4}A:0.001Eu^{2+}$,

in which A was a fired product of $CaSiF_6$).

Example 7

The same amounts of the barium fluoride, and barium bromide, europium bromide and distilled water as employed in Example 5 were mixed to prepare a suspension. The suspension was dried and pulverized in the same manner as described in Example 5. To the pulverized product was then added 4.32 g. of calcium hexafluoro silicate ($CaSiF_6$), and mixed therewith to obtain a homogeneous mixture of the starting materials for the preparation of a phosphor.

The procedure of Example 5 was repeated except for using the so prepared mixture to obtain a divalent europium activated barium fluorobromide phosphor powder

$(BaFBr \cdot 9.9\times10^{-3}A:0.001Eu^{2+}$,

in which A was a fired product of $CaSiF_6$).

The phosphors prepared in Examples 5, 6 and 7 were stimulated with He-Ne laser (oscillation wavelength: 632.8 nm) after exposure to X-rays at 80 KVp, to evaluate the luminance of stimulated emission.

The results are set forth in Table 2. The aforementioned result on the phosphor prepared in Comparison Example 1 is also set forth in Table 2.

TABLE 2

| | x value | Relative luminance |
|---|---|---|
| Example 5 | $3.3\times10^{-3}$ | 110 |
| 6 | $3.3\times10^{-4}$ | 105 |
| 7 | $9.9\times10^{-3}$ | 127 |
| Com. Example 1 | 0 | 100 |

Example 8

To 500 cc. of distilled water ($H_2O$) were added 175.34 g. of barium fluoride ($BaF_2$), 333.18 g. of barium bromide

$(BaFr_2 \cdot 2H_2O)$

and 0.783 g. of europium bromide ($EuBr_3$), and mixed therewith to give a suspension. The suspension was dried at 60°C under reduced pressure for 3 hours and further dried at 150°C under vacuum for another 3 hours. The dried product was finely pulverized in a mortar. To the so pulverized product was added 1.37 g. of sodium hexafluoro titanate ($Na_2TiF_6$), and mixed therewith to obtain a homogeneous mixture of the starting materials for the preparation of a phosphor.

The procedure of Example 1 was repeated except for using the so prepared mixture to obtain a divalent europium activated barium fluorobromide phosphor powder

$(BaFBr \cdot 3.3\times10^{-3}A:0.001Eu^{2+}$,

in which A was a fired product of $Na_2TiF_6$).

The phosphor prepared in Example 8 was stimulated with He-Ne laser (oscillation wavelength: 632.8 nm) after exposure to X-rays at 80 KVp, to evaluate the luminance of stimulated emission.

The result is set forth in Table 3. The aforementioned result on the phosphor prepared in Comparison Example 1 is also set forth in Table 3.

TABLE 3

| | x value | Relative luminance |
|---|---|---|
| Example 8 | $3.3\times10^{-3}$ | 120 |
| Com. Example 1 | 0 | 100 |

Example 9

To 500 cc. of distilled water ($H_2O$) were added 175.34 g. of barium fluoride ($BaF_2$), 333.18 g. of barium bromide

$$(BaBr_2 \cdot 2H_2O)$$

and 0.783 g. of europium bromide ($EuBr_3$), and mixed therewith to give a suspension. The suspension was dried at 60°C under reduced pressure for 3 hours and further dried at 150°C under vacuum for another 3 hours. The dried product was finely pulverized in a mortar. To the so pulverized product was then added 1.66 g. of sodium hexafluoro zirconate ($Na_2ZrF_6$), and mixed therewith to obtain a homogeneous mixture of the starting materials for the preparation of a phosphor.

The procedure of Example 1 was repeated except for using the so prepared mixture to obtain a divalent europium activated barium fluorobromide phosphor powder

$$(BaFBr \cdot 3.3\times10^{-3}A{:}0.001Eu^{2+},$$

in which A was a fired product of $Na_2ZrF_6$).

The phosphor prepared in Example 9 was stimulated with He-Ne laser (oscillation wavelength: 632.8 nm) after exposure to X-rays at 80 KVp, to evaluate the luminance of stimulated emission.

The result is set forth in Table 4. The aforementioned result on the phosphor prepared in Comparison Example 1 is also set forth in Table 4.

TABLE 4

| | x value | Relative luminance |
|---|---|---|
| Example 9 | $3.3\times10^{-3}$ | 140 |
| Com. Example 1 | 0 | 100 |

**Claims**

1. A divalent europium activated barium fluorohalide phosphor having the formula (I):

$$BaFX \cdot xA{:}yEu^{2+} \quad (I)$$

in which X is at least one halogen selected from the group consisting of Cl, Br and I; A is at least one fired product of a hexafluoro compound selected from the group consisting of monovalent and divalent metal salts of hexafluoro silicic acid, hexafluoro titanic acid and hexafluoro zirconic acid; and *x* and *y* are numbers satisfying the conditions of

$$10^{-6} \leqq x \leqq 0.1$$

and

$$0 \leqq y \leqq 0.1,$$

respectively.

2. The phosphor as claimed in Claim 1, in which *x* and *y* are numbers satisfying the conditions of

$$10^{-4} \leqq x \leqq 10^{-2}$$

and

$$10^{-5} \leqq y \leqq 10^{-2},$$

respectively.

3. The phosphor as claimed in Claim 1, in which the metal constituting the said monovalent or divalent metal salt is at least one metal selected from the group consisting of Li, Na, K, Rb, Cs, Mg, Ca, Sr, Ba, Zn and Mn.

4. The phosphor as claimed in Claim 1, in which A in the formula (I) is at least one fired product of a metal salt having the formula (II)

$$M_aSiF_6 \quad (II)$$

in which *a* is 2 or 1; M is an alkali metal selected from the group consisting of Li, Na, K, Rb and Cs, in the case of *a*=2; and M is a divalent metal selected from the group consisting of Mg, Ca, Sr, Ba, Zn and Mn, in the case of *a*=1.

5. The phosphor as claimed in Claim 4, in which *a* in the formula (II) is 2 and M is an alkali metal selected from the group consisting of Li, Na, K, Rb and Cs.

6. The phosphor as claimed in Claim 1, in which A in the formula (I) is at least one fired product of a metal salt having the formula (III):

$$M_2QF_6 \quad (III)$$

in which Q is Zr or Ti; and M is an alkali metal selected from the group consisting of Li, Na, K, Rb and Cs.

7. A process for the preparation of a divalent europium activated barium fluorohalide phosphor having the formula (I):

$$BaFX \cdot xA{:}yEu^{2+} \quad (I)$$

in which X is at least one halogen selected from the group consisting of Cl, Br and I; A is at least one fired product of a hexafluoro compound selected from the group consisting of monovalent and divalent metal salts of hexafluoro silicic acid, hexafluoro titanic acid and hexafluoro zirconic acid; and *x* and *y* are numbers satisfying the conditions of

$$10^{-6} \leqq x \leqq 0.1$$

and

$$0 < y \leqq 0.1,$$

respectively,

which comprises:

mixing raw materials for the preparation of a phosphor in a stoichiometric ratio corresponding to the formula (IV):

$$BaFX{:}yEu \quad (IV)$$

in which X and *y* have the same meanings as defined above;

adding to the resulting mixture at least one hexafluoro compound selected from the group consisting of monovalent and divalent metal salts of hexafluoro silicic acid, hexafluoro titanic acid and hexafluoro zirconic acid, in the amount of x mol for 1 gram atom of barium contained in the mixture; and

firing the so obtained mixture.

**Revendications**

1. Substance luminescente de fluorohalogénure de baryum activé par l'europium divalent, ayant la formule (I):

$$BaFX \,.\, xA{:}yEu^{2+} \quad (I)$$

dans laquelle X est au moins un halogène choisi dans le groupe formé de Cl, Br et I; A est au moins un produit cuit d'un composé hexafluoré choisi dans le groupe formé des sels de métaux monovalents et divalents de l'acide hexafluorosilicique, de l'acide hexafluororotitanique et de l'acide hexafluorozirconique; et *x* et *y* sont des nombres satisfaisant respectivement les conditions

$$10 \leqslant^{6} \leqslant x \leqslant 0{,}1 \text{ et } 0 < y \leqslant 0{,}1.$$

2. Substance luminescente selon la revendication 1, dans laquelle *x* et *y* sont des nombres satisfaisant respectivement les conditions.

$$10^{-4} \leqslant x \leqslant 10^{-2} \text{ et } 10^{-5} \leqslant y \leqslant 10^{-2}.$$

3. Substance luminescente selon la revendication 1, dans laquelle le métal constituant le sel de métal monovalent ou divalent est au moins un métal choisi dans le groupe formé de Li, Na, K, Rb, Cs, Mg, Ca, Sr, Ba, Zn et Mn.

4. Substance luminescente selon la revendication 1, dans laquelle A, dans la formule (I), est au moins un produit cuit d'un sel métallique ayant la formule (II):

$$M_aSiF_6 \quad (II)$$

dans laquelle *a* est 2 ou 1; M est un métal alcalin choisi dans le groupe formé de Li, Na, K, Rb et Cs dans le cas où a=2; et M est un métal divalent choisi dans le groupe formé de Mg, Ca, Sr, Ba, Zn et Mn dans le cas où a=1.

5. Substance luminescente selon la revendication 4, dans laquelle *a*, dans la formule (II), est 2 et M est un métal alcalin choisi dans le groupe formé de Li, Na, K, Rb, et Cs.

6. Substance luminescente selon la revendication 1, dans laquelle A, dans la formule (I), est au moins un produit cuit d'un sel métallique ayant la formula (III):

$$M_2QF_6 \quad (III)$$

dans laquelle Q est Zr ou Ti; et M est un métal alcalin choisi dans le groupe formé de Li, Na, K, Rb et Cs.

7. Procédé pour la préparation d'une substance luminescente de fluorohalogénure de baryum activé par l'europium divalent, ayant la formule (I):

$$BaFX \,.\, xA{:}yEu^{2+} \quad (I)$$

dań laquelle X est au moins un halogène choisi dans le groupe formé de Cl, Br et I; A est au moins un produit cuit d'un composé hexafluoré choisi dans le groupe formé des sels de métaux monovalents et divalents de l'acide hexafluorosilicique, de l'acide hexafluorotitanique et de l'acide hexafluorozirconique; et *x* et *y* sont des nombres satisfaisant respectivement les conditions

$$10^{-6} \leqslant x \leqslant 0{,}1 \text{ et } 0 < y \leqslant 0{,}1$$

qui consiste:

— à mélanger des matières premières pour la préparation d'une substance luminescente en un rapport stoechiométrique correspondant à la formule (IV):

$$BaFX{:}yEu \quad (IV)$$

dans laquelle X et y ont les mêmes significations que définies ci-dessus;

— à ajouter au mélange obtenu au moins un composé hexafluoré choisi dans le groupe formé des sels de métaux monovalents et divalents de l'acide hexafluorosilicique, de l'acide hexafluorotitanique et de l'acide hexafluorozirconique, à raison de *x* moles pour 1 atome-gramme de baryum contenu dans le mélange; et
— à cuire le mélange ainsi obtenu.

**Patentansprüche**

1. Mit zweiwertigem Europium aktivierter Barium - Fluorhalogenid - Leuchtstoff der Formel (I):

$$BaFX \cdot xA{:}yEu^{2+} \quad (I)$$

worin bedeuten:

X mindestens ein Halogen, gewählt aus Cl, Br und J;

A mindestens ein gebranntes Produkt einer Hexafluorverbindung, gewählt aus einwertigen und zweiwertigen Metallsalzen von Hexafluorkieselsäure, Hexafluortitansäure und Hexafluorzirkonsäure; und

x und y Zahlen, die den Bedingungen

$$10^{-6} \leqq x \leqq 0{,}1 \text{ und } 0 < y \leqq 0{,}1$$

genügen.

2. Leuchtstoff nach Anspruch 1, dadurch gekennzeichnet, daß x und y Zahlen sind, die den Bedingungen

$$10^{-4} \leqq x \leqq 10^{-2} \text{ und } 10^{-5} \leqq y \leqq 10^{-2}$$

genügen.

3. Leuchtstoff nach Anspruch 1, dadurch gekennzeichnet, daß das Metall des einwertigen oder zweiwertigen Metallsalzes mindestens ein Metall, gewählt aus der Gruppe Li, Na, K, Rb, Cs, Mg, Ca, Sr, Ba, Zn und Mn, ist.

4. Leuchtstoff nach Anspruch 1, dadurch gekennzeichnet, daß A in Formel (I) mindestens ein gebranntes Produkt eines Metallsalzes der Formel (II) ist

$$M_aSiF_6 \qquad \text{(II)}$$

worin bedeuten:

a 2 oder 1;

M ein Alkalimetall, gewählt auf der Gruppe Li, Na, K, Rb und Cs, im Falle von a=2; und

M ein zweiwertiges Metall, gewählt aus der Gruppe Mg, Ca, Sr, Ba, Zn und Mn, im Falle von a=1.

5. Leuchtstoff nach Anspruch 4, dadurch gekennzeichnet, daß a in der Formel (II) 2 und M ein Alkalimetall, gewählt aus der Gruppe Li, Na, K, Rb und Cs, bedeuten.

6. Leuchtstoff nach Anspruch 1, dadurch gekennzeichnet, daß A in der Formel (I) mindestens ein gebranntes Produkt eines Metallsalzes der Formel (III) ist:

$$M_2QF_6 \qquad \text{(III)}$$

worin Q, Zr oder Ti und M ein Alkalimetall, gewählt aus Li, Na, K, Rb und Cs, bedeuten.

7. Verfahren zur Herstellung eines mit zweiwertigem Europium aktivierten Barium - Fluorhalogenid - Leuchtstoffs der Formel (I):

$$BaFX \cdot xA{:}Eu^{2+} \qquad \text{(I)}$$

worin bedeuten:

X mindestens ein Halogen, gewählt aus Cl, Br und J;

A mindestens ein gebranntes Produkt einer Hexafluorverbindung, gewählt aus einwertigen und zweiwertigen Metallsalzen von Hexafluorkieselsäure, Hexafluortitansäure und Hexafluorzirkonsäure; und

x und y Zahlen, die den Bedingungen

$$10^{-6} \leqq x \leqq 0{,}1 \text{ und } 0 < y \leqq 0{,}1$$

genügen, umfassend

das Vermischen von Rohrmaterialien zur Herstellung eines Leuchtstoffs in einem stöchiometrischen Verhältnis entsprechend der Formel (IV):

$$BaFX{:}yEu \qquad \text{(IV)}$$

worin X und y die oben definierten Bedeutungen haben;

das Zusetzen zu der resultierenden Mischung mindestens einer Hexafluorverbindung, gewählt aus einwertigen und zweiwertigen Metallsalzen von Hexafluorkieselsäure, Hexafluortitansäure und Hexafluorzirkonsäure, in der Menge von x Mol für 1 Grammatom des in der Mischung enthaltenen Bariums; und

das Brennen der so erhaltenen Mischung.

FIG.1